# EUROPÄISCHE PATENTANMELDUNG

(11) **EP 4 631 349 A1**
(43) Veröffentlichungstag der Anmeldung: **15.10.2025**
(21) Anmeldenummer: 24169159.1
(22) Anmeldetag: 09.04.2024
(51) Int. Cl.: A01G 9/14

(54) **ANORDNUNG ZUR AUSSTATTUNG VON "INTELLIGENTEN" GEBÄUDEHÜLLEN UND ÜBERDACHUNGEN VON OFFENEN AUSSENBEREICHEN ZUR FUNKTIONALEN STEUERUNG UND ZUM LOKALEN ENERGIEMANAGEMENT**

(71) Anmelder: Heinrich, Pia Carmen, 73095 Albershausen (DE)
(72) Erfinder: Heinrich, Pia Carmen, 73095 Albershausen (DE)
(74) Vertreter: Ruckh, Rainer Gerhard

(57) **Zusammenfassung**

Die Erfindung betrifft eine Anordnung (1) von "intelligent" ausgestatteten Gebäudehüllen (2) und Überdachungen für optimiertes Energiemanagement und funktionale Steuerung, mit einer einen Innenraum (3) umschließenden Gebäudehülle (2) und/oder Überdachungen. Die Gebäudehülle (2) oder die Überdachung weisen Gebäudehüllenelemente (4) mit modularen Einheiten in Form von auf transparenten Trägermaterialien aufgebrachten unterschiedlichen Beschichtungen (20a, 20b, 20c) auf, darunter optisch teiltransparente Beschichtungen, farbneutral oder spezifisch eingefärbt. Die einzelnen Beschichtungen (20a, 20b, 20c) bilden Funktionselemente, mittels derer Heiz-, Kühl-, Filter-, Beleuchtungs- und Beschattungsprozesse sowie Prozesse zum Energiemanagement, der Energiegewinnung, Energiewandlung und -speicherung durchführbar sind. Die Prozesssteuerung kann KI-gestützt über eine zentrale Steuereinheit (7) erfolgen.

## Beschreibung

Die Erfindung betrifft eine Anordnung zur Ausstattung von "intelligenten" Gebäudehüllen und Überdachungen von Außenbereichen.

Anordnungen, auf welche sich die vorliegende Erfindung bezieht, umfassen die den Innenraum umgebende Gebäudehülle und Überdachungen für sich anschließende und separate Außenbereiche.

Derartige Anordnungen können von überdachten oder räumlich geschlossenen Anlagenzentren/Produktionsstätten, Logistikzentren und generell Arbeits- und Wohnanlagen ausgebildet sein. Die funktionale Ausstattung der Gebäudehülle durch Beschichtungen ist vorteilhaft zur Energieaufnahme, Energieumwandlung und -speicherung, zum Heizen, passiven Kühlen, Beleuchten, Beschatten, Filtern von Lichtspektren.

Die Anwendungen sind energieoptimierte Prozesssteuerung und Kultivierung, Züchtung, Pflege von Pflanzen und Tieren sowie optimiertes Energiemanagement von Wohn- und Produktionsstätten.

Um einen Teil, der für den Betrieb eines Anlagenzentrums oder Wohnanlage benötigten Energie bereitzustellen, ist es bekannt, auf dem Dach oder außerhalb, lichtundurchlässige Photovoltaikmodule anzubringen. Die zusätzliche Energie wird über eine Netzspannung einer Spannungsversorgung eines überregionalen Energieerzeugers bereitgestellt.

Im Anlagenzentrum, z.B. einem Gewächshaus, wird Energie in Form von Wärme, insbesondere von Umgebungswärme zum Anbau, der Aufzucht und der Pflege von Pflanzen und Tieren benötigt. Der Energiebedarf variiert im Tagesablauf und wird bedarfsgemäß mechanisch und/oder automatisch gesteuert (z.B. durch Heizung, Dachöffnungen, Fenster, Beschattungsschirme, Energieschirme).

Vorteilhaft werden zur energetischen Abschirmung nach außen Energieschirme unter dem Dach angebracht, die während der Nacht den Innenraum hermetisch abdichten. Tagsüber wird die Sonneneinstrahlung über Beschattungsschirme im Innen- und Außenbereich geregelt. Zum lokalen Heizen, Kühlen oder Beleuchten von bestimmten Räumen oder Abschnitten werden Geräte und Produkte, wie Ventilatoren, Klimaanlagen, Heizkanonen, Lampen, mit Steuer- und Regelungseinheiten gesteuert.

Der Erfindung liegt die Aufgabe zugrunde, für eine Anordnung mit einer Gebäudehülle und/oder Überdachungsausführungen einen optimierten, insbesondere energieoptimierten Betrieb zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Anordnung mit Mitteln für ein lokales optimiertes Energiemanagement, einer funktionalen Steuerung und mit einer einen Innenraum umschließenden Gebäudehülle und/oder Überdachungen. Die Gebäudehülle oder die Überdachung weisen Gebäudehüllenelemente mit modularen Einheiten in Form von auf transparenten Trägermaterialien aufgebrachten unterschiedlichen Beschichtungen auf. Darunter sind optisch teiltransparente Beschichtungen, farbneutral oder spezifisch eingefärbt, wobei die einzelnen Beschichtungen Funktionselemente bilden. Mittels der Funktionselemente sind Beleuchtungs-, Beschattungs-, Filter-, Heiz-, Kühl-, Energiegewinnungs- oder Energiewandlungsprozesse durchführbar.

Die Erfindung betrifft eine Anordnung von "intelligent" ausgestatteten Gebäudehüllen und Überdachungen mit Mitteln zur funktionalen Steuerung und optimierten Energieversorgung der Anlageneinheiten sowie zur Prozessoptimierung der Anlageneinheiten. Die Anordnung kann hierbei eine Gebäudehülle umschließenden Innenraum und/oder eine Überdachung von Außenbereichen darstellen. Die erfindungsgemäße "intelligente" Gebäudehülle bzw. die "intelligente" Überdachung weist Gebäudehüllenelemente mit modularen Einheiten in Form von auf transparenten Trägermaterialien aufgebrachten unterschiedlichen Beschichtungen auf.

Die modularen Einheiten können an Gebäudehüllenelementen an- oder aufgebracht sein oder Bestandteile der Gebäudehüllenelemente sein. Insbesondere bilden die modularen Einheiten nachrüstbare Einheiten, die nachträglich an Gebäudehüllenelementen angebaut werden können.

Wesentlich ist, dass die Beschichtungen der modularen Einheiten auf transparenten Trägermaterialien aufgebracht sind, so dass die Trägermaterialien auftreffendes Licht nicht oder nicht nennenswert schwächen. Transparent bedeutet in diesem Zusammenhang, dass auftreffendes Licht das transparente Trägermaterial größtenteils, insbesondere mit einem Anteil >90% durchsetzt.

Die modularen Einheiten sind funktional beschichtet. Dazu gehören teiltransparente Schichten, die entweder farbneutral oder spezifisch eingefärbt sind. Diese Ausstattung dient zur funktionalen Steuerung und zum lokalen Energiemanagement. Bei der erfindungsgemäßen Anordnung können erweiterte Funktionalitäten bereitgestellt werden, wodurch verfahrens-, produkt- und prozesstechnische Optimierungen und Einsparungen erfolgen können.

Die modularen Einheiten können unterschiedliche Beschichtungen aufweisen, darunter optisch teiltransparente, farbneutral oder spezifisch eingefärbte Schichten. Die einzelnen Beschichtungen bilden Funktionselemente zur Energieaufnahme, Energieumwandlung und/oder Energiespeicherung zur lokalen Verwendung. Mittels innovativer Beschichtungstechnologien können weitere funktionale Steuerungseinheiten, vorteilhaft für Heiz-, Kühl-, Beschattungs-, Belichtungs-, Beleuchtungs- und Filterprozesse der Lichtspektren, erstellt werden.

Mit der erfindungsgemäßen Anordnung wird ein lokales System bereitgestellt, welches funktional und energieoptimiert betrieben werden kann.

Dabei erfolgt die Energiegewinnung ohne fossile Brennstoffe.

Vorteilhaft umschließt die Anordnung der intelligenten, funktionalen Gebäudehülle einen Innenraum und überdeckt Außenbereiche, insbesondere zur Kultivierung und Aufzucht von Pflanzen und Tieren.

Die erfindungsgemäße Anordnung kann in Anlagenbereichen von geschlossenen Greenhouse-Anlagen, Urban Farming, Vertical Farming, offenen, überdachten landwirtschaftlichen Flächen zum Anbau (Feldanbau, Obstanbau), Tiergehegen und dergleichen genutzt werden. Weiterhin kann die erfindungsgemäße Anordnung vorteilhaft auf Gebäudehüllen (geschlossen, lichtdurchlässig oder lichtundurchlässig) und Überdachungsbereichen, Tiny-Häusern, Logistikzentren, sonstigen Anlagenzentren zur Fertigung und Produktion, Büro- und Wohngebäuden, Flughäfen, Schulen und überdachten Anlagen, z.B. für Parkplätze, Abstellplätze, Gänge, und dergleichen, ausgebildet sein.

Vorteilhaft weist die Anordnung Stromspeichereinheiten auf.

Dabei bilden die Stromspeichereinheiten lokale Einheiten im Bereich der Gebäudehülle oder im Bereich der Überdachung und können insbesondere Bestandteil der Gebäudehülle oder Überdachung sein.

Damit wird eine lokale Strom- bzw. Energiespeicherung durch die Anordnung selbst bereitgestellt. Die gespeicherte Energie kann jederzeit bei Bedarf abgerufen werden, um Prozesse, vorteilhaft Produktionsprozesse in der Anlageneinheit, durchführen zu können.

Die Beschichtungen als Bestandteile von modularen Einheiten mit Trägermaterialien bilden Funktionselemente zur Energiegewinnung, Energieumwandlung und Energiespeicherung und zur Steuerung funktionaler Anwendungen für Heiz-, Kühl, Beleuchtung, Beschattung und Filterprozesse der Lichtspektren aus. Die Beschichtungen als Bestandteile von modularen Einheiten mit Trägermaterialien sind Bestandteil der Gebäudehülle und/oder der Überdachungselemente, wodurch die Funktionalität der Gebäudehülle und/oder der Überdachungselemente erweitert ist.

Die Beschichtungen sind vorteilhaft frei von Silizium und seltenen Erden.

Die Beschichtungen sind vorteilhaft teiltransparent und farbneutral oder spezifisch eingefärbt.

Des Weiteren können Funktionselemente in Form von teiltransparenten Photovoltaikmodulen vorgesehen sein.

Dabei kann vorteilhaft mittels teiltransparenter Photovoltaikmodule zur individuellen, steuerbaren Abschattung bei gleichzeitiger Gewinnung von elektrischer Energie in Verbindung mit Wasserstofftechnologie zur Sektorenkopplung, Wasserstoff generiert und mittels Brennstoffzellentechnologie zur Energiewandlung, Energie erzeugt werden. Hierbei freigesetzte Prozessenergien können separat gespeichert und verwendet werden.

Dabei kann mittels eines Elektrolyseurs in einer Energiezentrale der Anlageneinheit Wasser in Wasserstoff und Sauerstoff aufgespalten werden. Der bei der Energiewandlung entstehende Wasserstoff wird einer Brennstoffzelle zur Erzeugung von elektrischer Energie zugeführt.

Gemäß einer vorteilhaften Ausgestaltung können Gebäudehüllenelemente sowohl aus lichtdurchlässigen Materialien (Glas, Kunststoffe), als auch aus lichtundurchlässigen Materialien (Holz, Beton, Kunststoffe, metallische Werkstoffe) bestehen.

Auf lichtdurchlässigen Gebäudehüllenelementen können vorteilhaft modulare Einheiten mit funktionalen Beschichtungen für Filter- und Beschattungsprozesse vorhanden sein. Filterprozesse werden durch wellenlängenselektive Filterung von Licht durchgeführt, Beschattungsprozesse durch wellenlängenselektive Absorption und/oder Reflexion von Licht.

Zweckmäßig können die Beschichtungen (Beschichtungsgeometrie) in Bahnen, Clustern und anderen geometrischen Anordnungen nebeneinander, untereinander appliziert sein.

Die so ausgebildeten Gebäudehüllenelemente können unterschiedliche Strukturen von Funktionselementen aufweisen, wobei diese Strukturen bezüglich den jeweiligen Applikationsanforderungen optimal angepasst sein können.

Besonders vorteilhaft sind Funktionselemente mit gleicher Funktionalität auf gleichen und unterschiedlichen Gebäudehüllenelementen über Leitungen miteinander verbunden.

Der Begriff Leitungen umfasst dabei jegliche Ausbildungen von elektrisch leitenden Kontakten oder Verbindungen. Durch diese werden Funktionselemente auf unterschiedlichen Gebäudehüllenelementen miteinander vernetzt und können gemeinsam, einzeln oder in Gruppen angesteuert und aktiviert werden.

Damit wird ein flexibles Netzwerk von Funktionselementen erhalten, das sich über eine Vielzahl von Gebäudehüllenelementen erstrecken kann.

Gemäß einer vorteilhaften Ausgestaltung weist die Anordnung eine zentrale Steuereinheit auf.

Mit der zentralen Steuereinheit wird vorteilhaft eine Prozesssteuerung durchgeführt, d.h. alle in der Anordnung über die Funktionselemente ablaufenden Prozesse und Funktionen können mit der Steuereinheit gesteuert werden.

Besonders vorteilhaft sind mittels der Steuereinheit Steuervorgänge abhängig von Sensorsignalen von Sensoren durchführbar.

Mit den Sensoren können Prozessparameter von durchzuführenden Prozessen oder auch Umgebungseinflüsse erfasst werden.

Beispielsweise sind als Sensoren Temperatursensoren, Feuchtigkeitssensoren oder Helligkeitssensoren vorgesehen.

Mit der zentralen Steuereinheit kann eine komplett automatisierte Ablaufsteuerung realisiert werden.

Besonders vorteilhaft sind in der Steuereinheit KI (Künstliche Intelligenz)-Algorithmen implementiert.

Damit wird ein selbstlernendes System erhalten, das eine selbsttätige Anpassung an sich ändernde Einsatzbedingungen ermöglicht.

Die Erfindung wird im Folgenden anhand der Zeichnungen erläutert. Es zeigen:
- Figur 1:: Ausführungsbeispiel der erfindungsgemäßen Anordnung in Form eines Anlagenzentrum, bestehend aus Dach und Seitenwänden.
- Figuren 2a-c:: Unterschiedliche Beschichtungen zur Ausbildung von Funktionselementen für Gebäudehüllenelemente der Anordnung gemäß Figur 1.
- Figuren 3a, b:: Anordnung der Beschichtungen gemäß den Figuren 2a, 2b, 2c auf einem Gebäudehüllenelement.
- Figur 4:: Draufsicht auf die Anordnung gemäß Figur 3a.
- Figur 5:: Mehrfachanordnung von Gebäudehüllenelementen der Gebäudehülle der Anordnung gemäß Figur 1.
- Figur 6:: Gebäudehüllenelement mit unterschiedlichen Funktionselementen, Beschichtungsausführung.

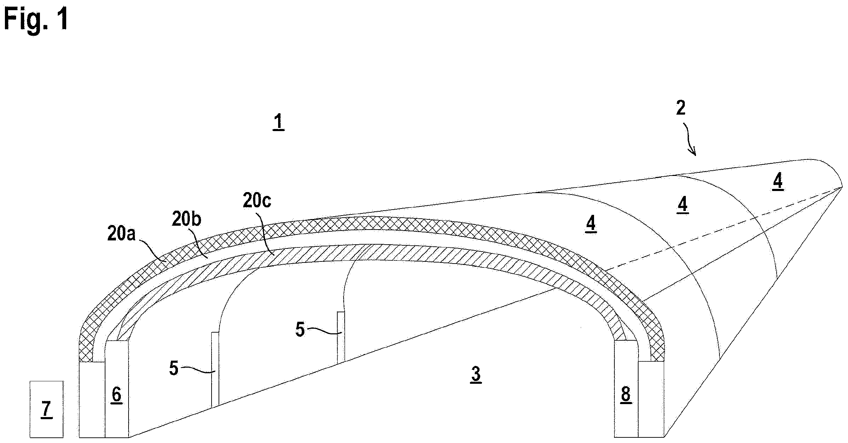

Figur 1 zeigt ein Ausführungsbeispiel der erfindungsgemäßen Anordnung 1. Die Anordnung 1 weist eine Gebäudehülle 2 auf, die einen Innenraum 3 umgibt.

Die Gebäudehülle 2 besteht aus mehreren miteinander verbundenen Gebäudehüllenelementen 4.

Im Innenraum 3 der Anordnung 1 sind Stromspeichereinheiten 5 vorhanden. Die Stromspeichereinheiten 5 sind im vorliegenden Fall von der Gebäudehülle 2 getrennte Einheiten. Prinzipiell können diese auch in der Gebäudehülle 2 integriert sein.

Im Anlagenzentrum befindet sich ein Elektrolyseur 8, der mit aus Photovoltaik gewonnener elektrischer Energie, Wasser in Wasserstoff und Sauerstoff zerlegt.

Der gewonnene Wasserstoff kann lokal gespeichert werden und "on demand" einer Brennstoffzelle 6 zugeführt werden. Die Brennstoffzelle 6 wandelt Wasserstoff in elektrische Energie.

Wie in Figur 1 schematisch dargestellt, sind auf den Gebäudehüllenelementen 4 Beschichtungen 20a, 20b, 20c vorhanden. Die Beschichtungen 20a, 20b, 20c sind generell auf nicht dargestellten Trägermaterialien aufgebracht, und bilden mit diesen modulare Einheiten, die insbesondere auch nachrüstbare Einheiten bilden. Diese Beschichtungen 20a, 20b, 20c bilden Funktionselemente aus, mittels derer Heiz-, Kühl-, Energiegewinnungs-, Energiewandlungs-, Beleuchtungsprozesse bzw. wellenselektive Filterprozesse durchgeführt werden können.

Der Anordnung 1 ist eine Steuereinheit 7 zugeordnet. Die Steuereinheit 7 weist eine Rechnereinheit mit vorteilhaft mehreren Prozesssteuerungseinheiten auf.

Die Steuereinheit 7 dient zur Steuerung von in der Anordnung 1 ablaufenden Prozessen und Funktionen sowie der Funktionselemente, der Stromspeichereinheit 5, der Brennstoffzelle 6 und des Elektrolyseurs 8.

Die Energieversorgung der Anordnung 1 erfolgt über die Funktionselemente der Gebäudehülle 2. Mit der Steuereinheit 7 wird ein selbsttätig ablaufendes Energiemanagement der einzelnen Komponenten der Anordnung 1 durchgeführt.

Vorteilhaft erfolgen die Steuervorgänge in der Steuereinheit 7 abhängig von Sensorsignalen. Die Sensoren erfassen Prozessparameter ablaufender Prozesse und Umgebungseinflüsse. Die Sensoren können in Form von Temperatursensoren, Feuchtigkeitssensoren, Helligkeitssensoren und dergleichen ausgebildet sein.

Vorteilhaft sind in der Steuereinheit 7 KI (Künstliche Intelligenz) -Algorithmen implementiert. Damit wird ein selbstlernendes System geschaffen, das sich selbsttätig an sich verändernde Einsatzbedingungen anpasst.

Auf lichtdurchlässigen Gebäudehüllenelementen 4 können mit dort aufgebrachten und/oder dort integrierten modularen Einheiten mit den Beschichtungen 20a, 20b, 20c Funktionselemente realisiert und damit Beschattungs- oder Filterprozesse durchgeführt werden.

Funktionselemente zur Beschattung absorbieren und/oder reflektieren wellenlängenspezifisch einfallendes Licht.

Funktionselemente zur Durchführung von Filterprozessen filtern bestimmte Spektralbereiche aus dem einfallenden Licht aus. Die Filtercharakteristik ist wellenselektiv einstellbar.

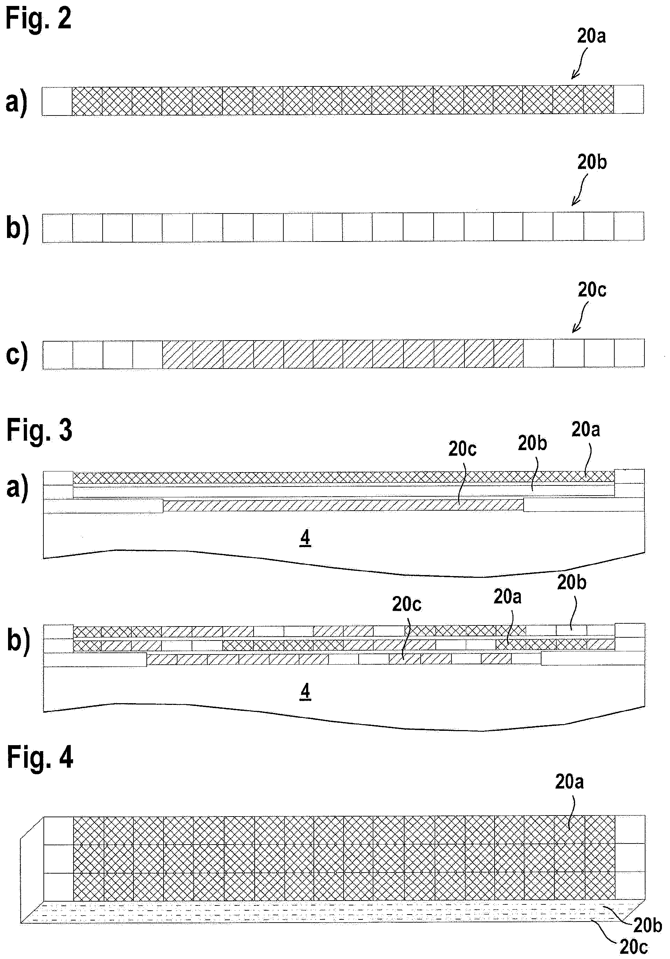

Figur 2a, zeigt teiltransparente, farbneutrale und eingefärbte Beschichtungen 20a zur Energieaufnahme (Photovoltaikmodule).

Figur 2b, zeigt eine funktionale Beschichtung 20b für ein Funktionselement, mit dem Heizprozesse durchgeführt werden.

Figur 2c zeigt eine Beschichtung 20c, die ein Leuchtmodul ausbildet, d.h. dass durch Zuführung von Energie Licht abstrahlt.

Figur 3a (Schnittbild) zeigt beispielhaft ein Gebäudehüllenelement 4 in Form einer Isolierglasscheibe. Gebäudehüllenelemente 4 aus Glas können als aus Einfachsicherheitsglas oder/und Verbundsicherheitsglas bestehen, oder Bestandteil eines Glasverbunds sein, oder aus anderen transparenten Materialien bestehen.

Auf der Außen- oder Innenseite der Glasscheibe sind die Beschichtungen 20a, 20b, 20c, d.h. die modularen Einheiten gemäß den Figuren 2a, 2b, 2c übereinander liegend aufgebracht.

Wie aus Figur 3a ersichtlich, erstrecken sich die Beschichtungen 20a, 20b nahezu über die gesamte Länge des Gebäudehüllenelements 4, während sich die Beschichtung 20c nur über den zentralen Bereich des Gebäudehüllenelements 4 erstreckt.

Figur 3b zeigt, dass die Beschichtungsanordnung auch clusterförmig, nebeneinanderliegend angeordnet sein kann.

Figur 4 zeigt die Anordnung aus Figur 3a in einer Draufsicht.

Die Anordnung 1 gemäß Figur 1 kann generell auch Gebäudehüllenelemente 4 in Form von Wandelementen aufweisen, die aus nicht transparenten Werkstoffen wie Beton, Holz, Kunststoffen oder metallischen Werkstoffen, bestehen. Das Aufbringen von Funktionselementen in Form von modularen Einheiten mit Beschichtungen 20a bis 20c erfolgt analog zu den Ausführungsformen der Figuren 3 und 4.

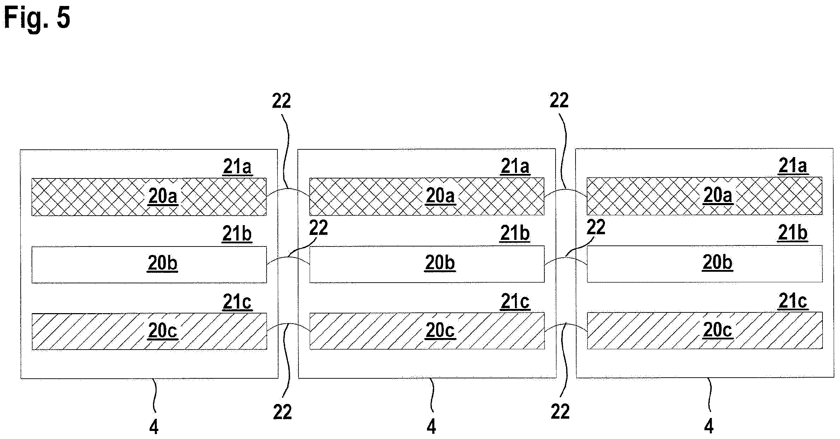

Figur 5 zeigt eine Mehrfachanordnung von Gebäudehüllenelementen 4, die über nicht dargestellte Halterungen lückenlos oder nahezu lückenlos miteinander verbunden sind, insbesondere in Form von Sprossensystemen.

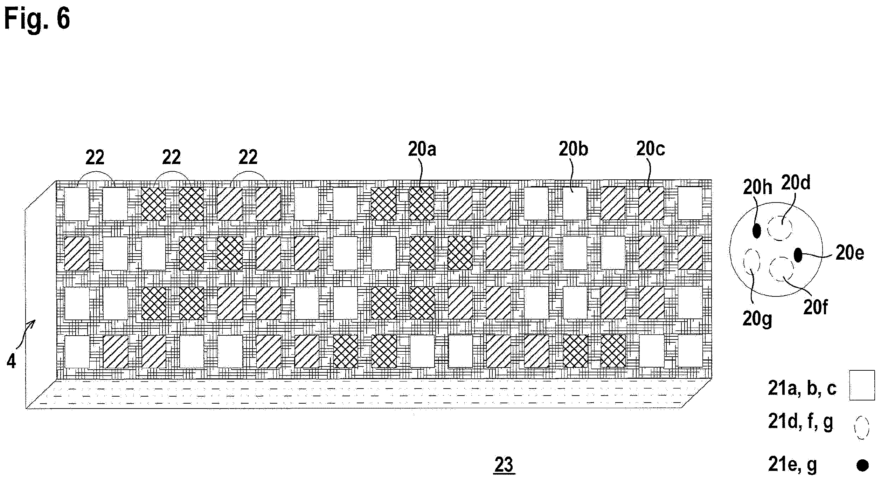

Die unterschiedlichen Funktionselemente ausbildenden Beschichtungen 20a, 20b, 20c sind in bestimmten Beschichtungsgeometrien 21a, 21b, 21c, hier in einzelnen Bahnen 21a, 21b, 21c nebeneinander auf dem Gebäudehüllenelement 4 aufgebracht (Figur 5). Natürlich sind auch andere Beschichtungsgeometrien 21a, 21b, 21c (Ellipse, Kreis) und Beschichtungsverbunde, Cluster 23 (Figur 6) möglich.

Wie Figur 5 zeigt, sind Beschichtungsgeometrien 21a, 21b, 21c in Form von Bahnen benachbarter Gebäudehüllenelemente 4 über Leitungen 22 elektrisch leitend verbunden. Dabei sind immer gleiche Beschichtungsbahnen über elektrische Leitungen 22 verbunden.

Damit werden gleichwertige Funktionselemente über die elektrischen Leitungen 22 verbunden und können so zentral von der Steuereinheit 7 gesteuert werden.

Natürlich können auch Gebäudehüllenelemente 4 mit übereinander liegenden Beschichtungen 20a, 20b, 20c in Mehrfachanordnungen zusammengekoppelt und über Leitungen 22 verbunden werden. Auch Mischformen mit Anordnungen 1 von übereinander und nebeneinander liegenden Beschichtungen 20a, 20b, 20c auf einem Gebäudehüllenelement 4 sind möglich.

Figur 6 zeigt ein Gebäudehüllenelement 4 mit unterschiedlichen Funktionselementen in Form eines Clusters 23, d.h. einer clusterförmigen Beschichtungsanordnung als Beschichtungsverbund mit Beschichtungsarten 20a, 20b, 20c, 20d, 20e, 20f, 20g, 20h und Beschichtungsgeometrien 21a, 21b, 21c, 21d, 21e, 21f, 21g, 21h.

### Bezugszeichenliste

- (1): Anordnung
- (2): Gebäudehülle
- (3): Innenraum
- (4): Gebäudehüllenelement
- (5): Stromspeichereinheit
- (6): Brennstoffzelle
- (7): Steuereinheit
- (8): Elektrolyseur
- (20a - 20h): Beschichtungen (Beschichtungsarten)
- (21a - 21h): Beschichtungsgeometrie: Bahn, Kreis, Ellipse und weitere
- (22): Leitung
- (23): Cluster: Beschichtungsverbund aus Beschichtungsarten und -geometrien

## Patentansprüche

1. Anordnung (1) mit Mitteln für ein lokales optimiertes Energiemanagement und einer funktionalen Steuerung, und mit einer einen Innenraum (3) umschließenden Gebäudehülle (2) und/oder Überdachungen, wobei die Gebäudehülle (2) oder die Überdachung Gebäudehüllenelemente (4) mit modularen Einheiten in Form von auf transparenten Trägermaterialien aufgebrachten unterschiedlichen Beschichtungen (20a, 20b, 20c) aufweisen, darunter optisch teiltransparente Beschichtungen farbneutral oder spezifisch eingefärbt, wobei die einzelnen Beschichtungen (20a, 20b, 20c) Funktionselemente bilden, mittels derer Beleuchtungs-, Beschattungs-, Filter-, Heiz-, Kühl-, Energiegewinnungs- oder Energiewandlungsprozesse durchführbar sind.

2. Anordnung (1) nach Anspruch 1, **dadurch gekennzeichnet, dass** die modularen Einheiten nachrüstbare Einheiten bilden.

3. Anordnung (1) nach Anspruch 1 oder 2, **dadurch gekennzeichnet, dass** Gebäudehüllenelemente (4) transparent ausgebildet sind.

4. Anordnung (1) nach Anspruch einem der Ansprüche 1 bis 3, **dadurch gekennzeichnet, dass** Funktionselemente in Form von optisch teiltransparenten Photovoltaikmodulen vorhanden sind, die farbneutral oder spezifisch eingefärbt sind.

5. Anordnung (1) nach einem der Ansprüche 1 bis 4, **dadurch gekennzeichnet, dass** Beschichtungen (20a, 20b, 20c) Funktionselemente ausbilden, mittels derer Beschattungsprozesse durch Absorption und/oder Reflexion durch Licht und Filterprozesse durch wellenlängenselektive Filterung von Licht durchführbar sind.

6. Anordnung (1) nach einem der Ansprüche 1 bis 5, **dadurch gekennzeichnet, dass** Beschichtungen (20a, 20b, 20c) Funktionselemente ausbilden, mittels derer Prozesse für Heizen, passives Kühlen durchführbar sind.

7. Anordnung (1) nach einem der Ansprüche 1 bis 6, **dadurch gekennzeichnet, dass** die beschichteten Gebäudehüllenelemente (4) mit Sensoren zur Temperatur-, Feuchtigkeits- und Helligkeitsregulierung ausgestattet und regulierbar sind.

8. Anordnung (1) nach einem der Ansprüche 1 bis 7, **dadurch gekennzeichnet, dass** die funktional beschichteten Gebäudehüllenelemente (4) mit einer zentralen Steuereinheit (7) verbunden sind, mittels derer eine Prozesssteuerung abhängig von Sensorsignalen vorgenommen wird.

9. Anordnung (1) nach Anspruch 8, **dadurch gekennzeichnet, dass** in der Steuereinheit (7) KI (Künstliche Intelligenz) -Algorithmen implementiert sind.

10. Anordnung (1) nach einem der Ansprüche 1 bis 9, **dadurch gekennzeichnet, dass** die Stromspeichereinheiten (5) lokale Einheiten im Bereich der Gebäudehülle (2) bilden.

11. Anordnung (1) nach einem der Ansprüche 1 bis 10, **dadurch gekennzeichnet, dass** die funktionalen Beschichtungen (20a, 20b, 20c) auf den Gebäudehüllenelementen (4) in unterschiedlichen geometrischen Anordnungen (21a, 21b, 21c) vorhanden sind.

12. Anordnung (1) nach Anspruch 11, **dadurch gekennzeichnet, dass** Funktionselemente mit gleicher Funktionalität über Leitungen (22) verbunden sind.

13. Anordnung (1) nach einem der Ansprüche 1 bis 12, **dadurch gekennzeichnet, dass** die funktionalen Beschichtungen (20a, 20b, 20c) modular in einem Verbund (Cluster (23)) angeordnet sind und auf lichtdurchlässigen sowie lichtundurchlässigen Materialen aufgebracht sind.

14. Anordnung (1) nach einem der Ansprüche 1 bis 13, **dadurch gekennzeichnet, dass** Funktionselemente zur Energiegewinnung und/oder Energiewandlung einen Elektrolyseur (8) zur Wasserstofferzeugung speisen.

15. Anordnung (1) nach Anspruch 14, **dadurch gekennzeichnet, dass** der erzeugte Wasserstoff in einer Brennstoffzelle (6) zur Gewinnung elektrischer Energie genutzt wird.
